# EUROPEAN PATENT APPLICATION

(11) **EP 4 373 065 A1**
(43) Date of publication of application: **22.05.2024**
(21) Application number: 22841692.1
(22) Date of filing: 10.03.2022
(51) Int. Cl.: H04M 11/00, H04W 88/04, H04N 21/442, H04L 67/61

(54) **COMMUNICATION DEVICE, COMMUNICATION METHOD, AND COMMUNICATION SYSTEM**

(30) Priority: 15.07.2021 JP 2021117379
(71) Applicant: Sony Group Corporation, Tokyo 108-0075 (JP)
(72) Inventor: YABE, Masato, Tokyo 108-0075 (JP)
(74) Representative: D Young & Co LLP
(86) International application number: PCT/JP2022/010517
(87) International publication number: WO 2023/286342

(57) **Abstract**

A communication device (40) relays communication between an information processing device (10) and a plurality of devices (50). The communication device (40) includes a setting unit (442) and a communication unit (410). The setting unit (442) sets priorities of the communication between the information processing device (10) and the plurality of devices (50) based on information transmitted by the information processing device (10) to at least one of the plurality of devices (50). The communication unit (410) relays the communication between the information processing device (10) and the plurality of devices (50) according to the priorities.

## Description

### Field

The present disclosure relates to a communication device, a communication method, and a communication system.

### Background

A Quality of Service (QoS) technique is known as a technique for stably using services on a network. Examples of a typical communication control method (QoS control) of the QoS technique include priority control (a control method for preferentially transmitting data of a high priority), band control (a control method for designating an effective bandwidth for specific communication), and the like.

For example, although QoS control is generally implemented in a router, the QoS control implemented here is control (hereinafter, also referred to as static QoS control) performed according to a preset rule (for example, communication related to specific service is prioritized, and communication with a specific device is prioritized). Such static QoS control cannot support a dynamically changing network situation. Therefore, it is desirable to perform dynamic QoS control in response to a dynamically changing network situation.

As a technique for performing dynamic QoS control, for example, a technique that performs dynamic QoS control according to a service is known.

### Citation List

### Patent Literature

Patent Literature 1: JP 2006-262379 A
Patent Literature 2: JP 2013-179678 A
Patent Literature 3: JP 2007-180889 A
Patent Literature 4: JP 2006-13891 A
Patent Literature 5: WO 2012/081170 A

### Non-Patent Literature

Non-Patent Literature 1: NETGEAR, "Dynamic QoS (Quality of Service) Prioritization Technology NETGEAR Nighthawk WiFi Routers", [online], October 2, 2015, [searched on May 24, 2021], Internet <URL: https://www.youtube.com/watch?v=fpGnk_ZfL5E>
Non-Patent Literature 2: Daisuke Tujino, "Reception Band Control Method Based on Dynamic Priority of Multiple Video Multicast Streams" [online], February 15, 2000, [searched on May 24, 2021], Internet <URL:http://www.mm.media.kyoto-u.ac.jp/old/research/thesis/1999/b/tsujino/tsuj ino.pdf> Summary

### Technical Problem

However, the above-described technique is a technique that performs dynamic QoS control per service. Therefore, even in a case where, for example, a plurality of devices that provide one service is included in the one service, QoS control cannot be performed for each of the plurality of devices. Thus, in a case where a plurality of devices that provide one service are included in the one service, a technique that can perform QoS control per device is desired.

Therefore, the present disclosure proposes, for example, a mechanism that can perform dynamic QoS control in one service.

Note that the above problem or object is merely one of a plurality of problems or objects that can be solved or achieved by the plurality of embodiments disclosed in this description.

### Solution to Problem

According to the present disclosure, a communication device is provided. The communication device relays communication between an information processing device and a plurality of devices. The communication device includes a setting unit and a communication unit. The setting unit sets priorities of the communication between the information processing device and the plurality of devices based on information transmitted by the information processing device to at least one of the plurality of devices. The communication unit relays the communication between the information processing device and the plurality of devices according to the priorities.

### Brief Description of Drawings

FIG. 1 is a view illustrating a configuration example of a communication system according to an embodiment of the present disclosure.
FIG. 2 is a block diagram illustrating a configuration example of an information processing device according to the embodiment of the present disclosure.
FIG. 3 is a block diagram illustrating a configuration example of a base station according to the embodiment of the present disclosure.
FIG. 4 is a block diagram illustrating a configuration example of a communication device according to the embodiment of the present disclosure.
FIG. 5 is a block diagram illustrating a configuration example of a device according to the embodiment of the present disclosure.
FIG. 6 is a view for describing an example of information transmitted by the information processing device according to the embodiment of the present disclosure.
FIG. 7 is a flowchart illustrating an example of relay processing executed by the communication device according to the embodiment of the present disclosure.
FIG. 8 is a view illustrating a configuration example of the communication system according to a modified example of the embodiment of the present disclosure.

### Description of Embodiments

Hereinafter, embodiments of the present disclosure will be described in detail with reference to the accompanying drawings. Note that, in this description and the drawings, components employing substantially the same functional configurations will be assigned the same reference numerals, and redundant description will be omitted.

Furthermore, in this description and the drawings, a plurality of components employing substantially the same functional configurations are distinguished by assigning different alphabets to ends of the same reference numerals in some cases. For example, a plurality of components employing substantially the same functional configuration are distinguished as devices 50A, 50B, and 50C as needed. In this regard, in a case where it is not particularly necessary to distinguish each of a plurality of components employing substantially the same functional configurations, only the same reference numeral is assigned. In a case where, for example, it is not particularly necessary to distinguish the devices 50A, 50B, and 50C, the devices are simply referred to as a device 50.

One or a plurality of embodiments (including examples and modified examples) described below can each be implemented independently. On the other hand, at least part of the plurality of embodiments described below may be combined with at least part of other embodiments as appropriate. The plurality of these embodiments may include mutually different novel features. Consequently, the plurality of these embodiments can contribute to solving mutually different objects or problems, and can exhibit mutually different effects.

### <<1. Introduction>>

### <1.1. Background>

As described above, QoS control is known as a technique that allows a user to stably use services provided on a network. Generally, routers arranged on a network perform static QoS control based on a predetermined rule.

A communication status of the network through which services are provided dynamically changes according to the number of users connected to the network, the amount of data exchanged on the network, and the like. There is a problem that the above-described static QoS control cannot cope with such a dynamically changing network situation.

By contrast with this, for example, Patent Literature 1 describes a network QoS control system that dynamically allocates an end-to-end communication quality guaranteed route to a communication device that includes a plurality of communication interfaces and guarantees QoS.

Furthermore, for example, according to the technique disclosed in Patent Literature 2, a router monitors communication traffic of a plurality of services of the same priority, restricts communication of a service whose communication traffic exceeds a predetermined amount, and thereby implements dynamic QoS control.

Furthermore, for example, the technique disclosed in Patent Literature 3 monitors and aggregates service contents, and thereby implements dynamic QoS control matching a service.

Furthermore, for example, the technique disclosed in Patent Literature 4 dynamically sets QoS per user using a priority control function supported by a router, and thereby implements dynamic QoS control.

Furthermore, for example, the technique disclosed in Non-Patent Literature 1 automatically recognizes applications (e.g., videos, browsers, and the like) and terminals (such as TVs, PCs, or mobile terminals), automatically allocates optimal priorities and bandwidths to the applications and the terminals, and thereby implements dynamic QoS control.

As described above, according to conventional dynamic QoS control, QoS control is mainly performed in units of services. By contrast with this, in a case where, for example, images shot by a plurality of cameras are presented to a user, that is, in a case where a plurality of devices are included in one service, and a plurality of devices and the user communicate with each other, it is desirable to perform dynamic QoS control for each of the plurality of devices. In a case where, for example, shot images of a plurality of cameras are presented to the user, it is desirable to present a shot image gazed by the user to the user preferentially over shot images of other cameras.

As described above, an example of a technique for transmitting a plurality of videos based on dynamic priorities is a technique described in Non-Patent Literature 2. Such a technique allocates a band to each video data stream based on the dynamic priority of a video from a sender such that a receiver stably receives each data stream.

Furthermore, the technique disclosed in Patent Literature 5 classifies a plurality of pieces of content into main content and standby content, allocates a high-quality line to the main content and allocates a low-quality line to the standby content, and thereby implements dynamic QoS control for transmission of the plurality of pieces of content.

However, according to the above-described techniques disclosed in Non-Patent Literature 2 and Patent Literature 5, one of a transmission side and a reception side needs to set a priority, and the other one needs to perform communication control matching the priority. As described above, according to the conventional techniques, both of a transmission side and a reception side need to perform communication control to implement dynamic QoS control, and have a problem that control processing in an entire system becomes complicated.

### <1.2. Outline of Proposed Technique>

Hence, according to the proposed technique according to the present disclosure, a communication device that relays communication between a plurality of devices that provide a service, and an information processing device that receives the provided service is disposed on a communication path of a network that connects the plurality of devices and the information processing device.

The communication device sets priorities of communication between the information processing device and the plurality of devices based on information transmitted from the information processing device to at least one of the plurality of devices. Furthermore, the communication device relays the communication between the information processing device and the plurality of devices according to the set priorities.

For example, it is assumed that the plurality of devices are cameras, and provide shot images shot by the cameras to the information processing device. The information processing device transmits instruction information to the camera based on, for example, a user's instruction. Here, for example, it is assumed that the information processing device transmits a user's switching instruction from a camera A to a camera B.

The communication device acquires instruction information for switching the camera A to the camera B. The communication device detects a user's behavior, that is, switching of the camera that the user pays attention to here based on the instruction information, and sets, for example, a priority of the camera B higher than a priority of the camera A. The communication device relays a shot image sent from the camera B to the information processing device preferentially over a shot image sent from the camera A to the information processing device based on the set priorities.

As described above, the communication device that is disposed between the plurality of devices that provide one service, and the information processing device and relays communication between the plurality of devices and the information processing device sets the priorities of communication based on information transmitted from the information processing device to the devices. The communication device relays communication between the plurality of devices and the information processing device based on the set priorities.

Consequently, the plurality of devices and the information processing device do not need to perform special control, and the communication device can dynamically change the priorities of communication between the plurality of devices that provide one service and the information processing device.

### <<2. Configuration Example of Communication System>>

### <2.1. Overall Configuration Example of Communication System>

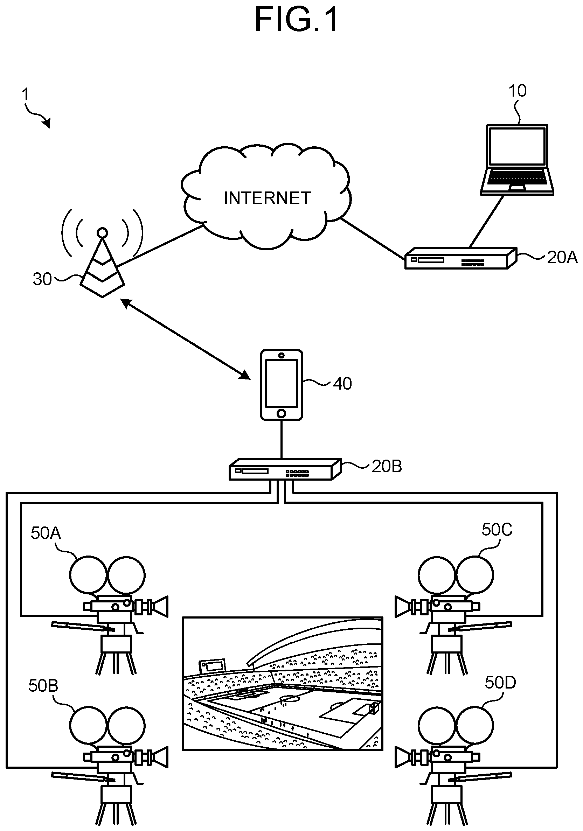

FIG. 1 is a view illustrating a configuration example of a communication system 1 according to the embodiment of the present disclosure. In the example illustrated in FIG. 1, the communication system 1 includes an information processing device 10, a plurality of routers 20A and 20B, a base station 30, a communication device 40, and the plurality of devices 50A to 50D. An example will be described with reference to FIG. 1 where, for example, a service is provided for transmitting, to the information processing device 10, videos shot by the plurality of devices 50A to 50D disposed in a stadium.

### [Information Processing Device 10]

The information processing device 10 is a device that receives a service provided by the communication system 1. The information processing device 10 is, for example, a device such as a PC or a tablet terminal. The information processing device 10 presents to the user a service to be provided, and accepts a user's instruction for the service.

For example, the information processing device 10 is disposed at a place such as a broadcasting station or an office away from the stadium at which the devices 50 are disposed. The information processing device 10 receives videos shot by the devices 50. Furthermore, the information processing device 10 controls the devices 50 from a remote place by, for example, performing an operation such as a shooting direction or zooming, and switching the operation target device 50 according to a user's instruction.

### [Router 20A]

The router 20A is a communication device that relays communication between the information processing device 10 and a network (the Internet in FIG. 1). The router 20A relays information transmitted by the information processing device 10 to the devices 50 via the Internet. Furthermore, the router 20A relays the videos transmitted by the devices 50 to the information processing device 10 via the Internet.

### [Base Station 30]

The base station 30 performs, for example, wireless communication with the communication device 40. The base station 30 transmits information received from the information processing device 10 to the communication device 40 via the Internet. The base station 30 transmits the videos of the devices 50 received from the communication device 40 to the information processing device 10 via the Internet.

### [Communication Device 40]

The communication device 40 is a relay device that relays communication between the devices 50 and the information processing device 10. Here, as a technique that a relay station relays communication of another device, and thereby enables access to the Internet, a so-called tethering technique is known. The communication device 40 illustrated in FIG. 1 relays communication of the devices 50 as a master unit (hereinafter, also referred to as a tethering master unit) of tethering. The communication device 40 needs only be any device that has a tethering function, and may be, for example, an information processing device such as a smartphone or a tablet terminal.

### [Router 20B]

The router 20B is a communication device that relays communication between the communication device 40 and the devices 50. The router 20B receives from the communication device 40 information transmitted by the information processing device 10, and relays the information to the devices 50. Furthermore, the router 20B relays to the communication device 40 the videos transmitted by the devices 50.

Note that, in a case where the communication device 40 can be directly connected with the plurality of devices 50, the router 20B can be omitted. Furthermore, instead of the router 20B, a relay device (e.g., communication hub) that does not have a routing function may be disposed between the devices 50 and the communication device 40.

### [Device 50]

The device 50 is a device that provides services to the user via the information processing device 10. For one service, the plurality of devices 50A to 50D are provided. In the example in FIG. 1, the devices 50 are, for example, cameras, and shoot videos of the stadium at which the devices 50 are arranged, and transmit the videos to the information processing device 10.

### <2.2. Configuration Example of Information Processing Device>

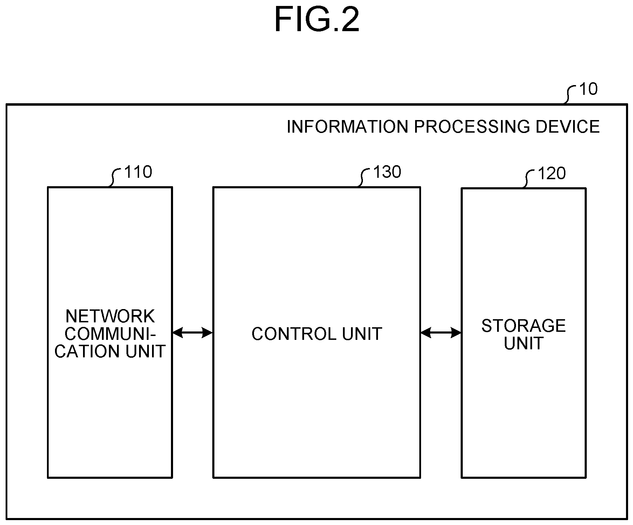

FIG. 2 is a block diagram illustrating the configuration example of the information processing device 10 according to the embodiment of the present disclosure. The information processing device 10 illustrated in FIG. 2 includes a network communication unit 110, a storage unit 120, and a control unit 130. Note that the configuration illustrated in FIG. 2 is a functional configuration, and a hardware configuration may be different from this functional configuration. Furthermore, the functions of the information processing device 10 may be implemented in a distributed manner in a plurality of physically separated components. For example, the information processing device 10 may include a plurality of server devices.

The network communication unit 110 is a communication interface for communicating with other devices. The network communication unit 110 may be a network interface, or may be a device connection interface. For example, the network communication unit 110 may include a Local Area Network (LAN) interface such as a Network Interface Card (NIC), or may include a Universal Serial Bus (USB) interface including a USB host controller, a USB port, or the like. Furthermore, the network communication unit 110 may be a wired interface, or may be a wireless interface. The network communication unit 110 functions as communication means of the information processing device 10. The network communication unit 110 is connected to the Internet via the router 20A under control of the control unit 130.

The storage unit 120 is a storage device such as a Dynamic Random Access Memory (DRAM), a Static Random Access Memory (SRAM), a flash memory, or a hard disk in which data can be read and written. The storage unit 120 functions as storage means of the information processing device 10.

The control unit 130 is a controller that controls each unit of the information processing device 10. The control unit 130 is implemented by, for example, a processor such as a Central Processing Unit (CPU) or a Micro Processing Unit (MPU). For example, the control unit 130 is implemented when a processor executes various programs stored in a storage device inside the information processing device 10 using a Random Access Memory (RAM) or the like as a working area. Note that the control unit 130 may be implemented by an integrated circuit such as an Application Specific Integrated Circuit (ASIC) or a Field Programmable Gate Array (FPGA). Any of the CPU, the MPU, the ASIC, and the FPGA can be regarded as a controller.

The control unit 130 presents data to the user by causing a display unit (not illustrated) to display the data (e.g., video data) received from the devices 50 via the network communication unit 110. Furthermore, the control unit 130 generates information to be transmitted to the devices 50 based on, for example, an operation or the like accepted from the user via an input unit (not illustrated), and transmits the information via the network communication unit 110.

### <2.3. Configuration Example of Base Station>

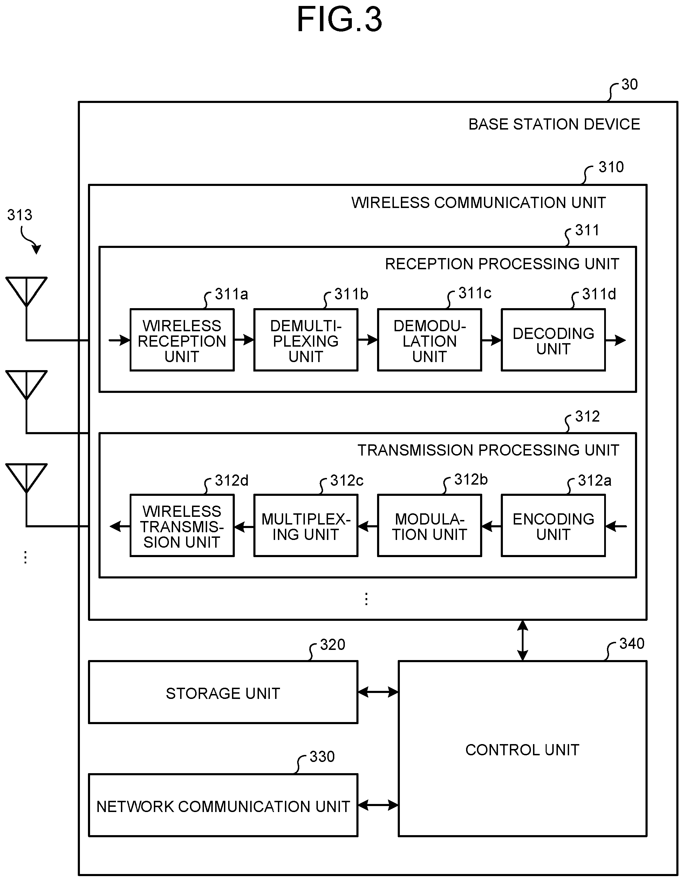

FIG. 3 is a block diagram illustrating a configuration example of the base station 30 according to the embodiment of the present disclosure. The base station 30 includes a wireless communication unit 310, a storage unit 320, a network communication unit 330, and a control unit 340. Note that the configuration illustrated in FIG. 3 is a functional configuration, and a hardware configuration may be different from this functional configuration. Furthermore, the functions of the base station 30 may be implemented in a distributed manner in a plurality of physically separated components.

The wireless communication unit 310 is a wireless communication interface that wirelessly communicates with other wireless communication devices (e.g., communication device 40). The wireless communication unit 310 operates under control of the control unit 340. Note that the wireless communication unit 310 may support a plurality of wireless access methods. For example, the wireless communication unit 310 may support both of NR and LTE. The wireless communication unit 310 may support W-CDMA and cdma 2000 in addition to NR or LTE. Naturally, the wireless communication unit 310 may support a wireless access method other than NR, LTE, W-CDMA, and cdma 2000.

The wireless communication unit 310 includes a reception processing unit 311, a transmission processing unit 312, and an antenna 313. The wireless communication unit 310 may include a plurality of the reception processing units 311, a plurality of the transmission processing units 312, and a plurality of the antennas 313. Note that, in a case where the wireless communication unit 310 supports a plurality of wireless access methods, each unit of the wireless communication unit 310 can be configured individually per wireless access method. For example, the reception processing unit 311 and the transmission processing unit 312 may be individually configured for LTE and NR.

The reception processing unit 311 processes an uplink signal received via the antenna 313. The reception processing unit 311 includes a wireless reception unit 311a, a demultiplexing unit 311b, a demodulation unit 311c, and a decoding unit 311d.

The wireless reception unit 311a performs downconversion, removal of an unnecessary frequency component, control of an amplification level, quadrature demodulation, conversion into a digital signal, removal of a guard interval, extraction of a frequency domain signal by fast Fourier transform, and the like on the uplink signal. The demultiplexing unit 311b demultiplexes an uplink channel such as a Physical Uplink Shared CHannel (PUSCH) or a Physical Uplink Control CHannel (PUCCH) and an uplink reference signal from the signal output from the wireless reception unit 311a. The demodulation unit 311c demodulates a received signal using a modulation scheme such as Binary Phase Shift Keying (BPSK) or Quadrature Phase Shift Keying (QPSK) for modulation symbols of the uplink channel. The modulation scheme used by the demodulation unit 311c may be 16 Quadrature Amplitude Modulation (QAM), 64 QAM, or 256 QAM. The decoding unit 311d performs decoding processing on encoded bits of the demodulated uplink channel. The decoded uplink data and uplink control information are output to a control unit 264.

The transmission processing unit 312 performs processing of transmitting downlink control information and downlink data. The transmission processing unit 312 includes an encoding unit 312a, a modulation unit 312b, a multiplexing unit 312c, and a wireless transmission unit 312d.

The encoding unit 312a encodes the downlink control information and the downlink data input from the control unit 264 using an encoding method such as block encoding, convolutional encoding, turbo encoding, or a Low Density Parity Check (LDPC) code. The modulation unit 312b modulates the encoded bits output from the encoding unit 312a by a predetermined modulation scheme such as BPSK, QPSK, 16 QAM, 64 QAM, or 256 QAM. The multiplexing unit 312c multiplexes the modulation symbols of each channel and the downlink reference signal, and arranges the modulation symbols and the downlink reference signal in a predetermined resource element. The wireless transmission unit 312d performs various signal processing on the signal from the multiplexing unit 312c. For example, the wireless transmission unit 312d performs processing such as conversion into a time domain by fast Fourier transform, addition of a guard interval, generation of a baseband digital signal, conversion into an analog signal, quadrature modulation, up-conversion, removal of an extra frequency component, and power amplification. The signal generated by the transmission processing unit 312 is transmitted from the antenna 313.

The storage unit 320 is a storage device such as a DRAM, an SRAM, a flash memory, or a hard disk in which data can be read and written. The storage unit 320 functions as storage means of the base station 30.

The network communication unit 330 is a communication interface for communicating with other devices. For example, the network communication unit 330 includes a LAN interface such as an NIC. Furthermore, the network communication unit 330 may be a wired interface, or may be a wireless interface. The network communication unit 330 functions as network communication means of the base station 30. The network communication unit 330 communicates with other devices under control of the control unit 340. The configuration of the network communication unit 330 may be the same as that of the network communication unit 110 of the information processing device 10.

The control unit 340 is a controller that controls each unit of the base station 30. The control unit 340 is implemented by, for example, a processor such as a Central Processing Unit (CPU) or a Micro Processing Unit (MPU). For example, the control unit 340 is implemented when a processor executes various programs stored in a storage device inside the base station 30 using a Random Access Memory (RAM) or the like as a working area. Note that the control unit 340 may be implemented by an integrated circuit such as an Application Specific Integrated Circuit (ASIC) or a Field Programmable Gate Array (FPGA). Any of the CPU, the MPU, the ASIC, and the FPGA can be regarded as a controller.

### <2.4. Configuration Example of Communication Device>

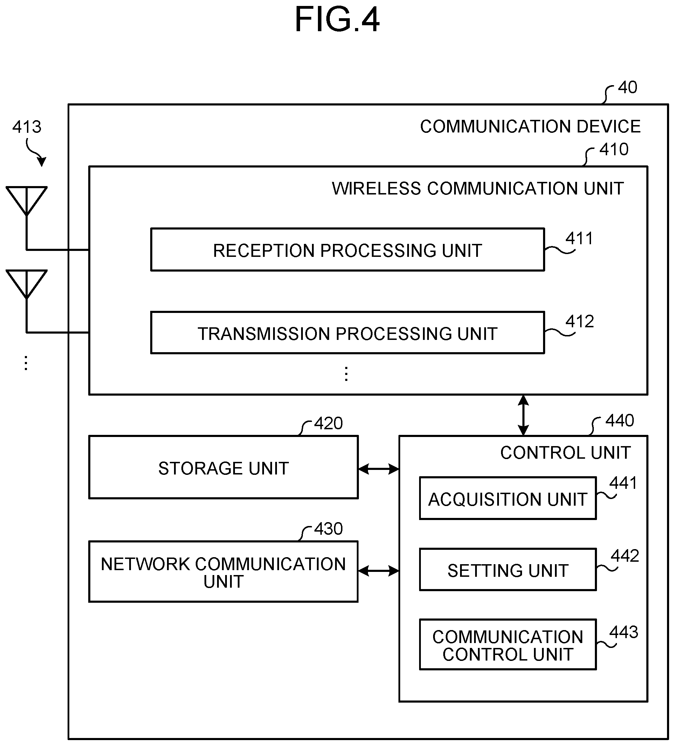

FIG. 4 is a block diagram illustrating a configuration example of the communication device 40 according to the embodiment of the present disclosure. The communication device 40 includes a wireless communication unit 410, a storage unit 420, a network communication unit 430, and a control unit 440. Note that the configuration illustrated in FIG. 4 is a functional configuration, and a hardware configuration may be different from the functional configuration. Furthermore, the functions of the communication device 40 may be implemented in a distributed manner in a plurality of physically separated components.

The wireless communication unit 410 is a wireless communication interface that wirelessly communicates with other communication devices (e.g., base station 30). The wireless communication unit 410 operates under control of the control unit 440. The wireless communication unit 410 supports one or a plurality of wireless access methods. For example, the wireless communication unit 410 supports both of NR and LTE. The wireless communication unit 31 may support other wireless access methods such as W-CDMA and cdma 2000.

The wireless communication unit 410 includes a reception processing unit 411, a transmission processing unit 412, and an antenna 413. The wireless communication unit 410 may include a plurality of the reception processing units 411, a plurality of the transmission processing units 412, and a plurality of the antennas 413. Note that, in a case where the wireless communication unit 410 supports a plurality of wireless access methods, each unit of the wireless communication unit 410 can be individually configured per wireless access method. For example, the reception processing unit 411 and the transmission processing unit 412 may be individually configured for LTE and NR. The configurations of the reception processing unit 411 and the transmission processing unit 412 are the same as those of the reception processing unit 311 and the transmission processing unit 312 of the base station 30.

The storage unit 420 is a storage device such as a DRAM, an SRAM, a flash memory, or a hard disk in which data can be read and written. The storage unit 420 functions as storage means of the communication device 40.

The network communication unit 430 is a communication interface for communicating with other devices. For example, the network communication unit 430 includes a LAN interface such as an NIC. Furthermore, the network communication unit 430 may be a wired interface, or may be a wireless interface. The network communication unit 430 functions as network communication means of the communication device 40. The network communication unit 430 communicates with other devices under control of the control unit 440. The configuration of the network communication unit 430 may be the same as that of the network communication unit 110 of the information processing device 10.

The control unit 440 is a controller that controls each unit of the communication device 40. The control unit 440 is implemented by, for example, a processor such as a Central Processing Unit (CPU) or a Micro Processing Unit (MPU). For example, the control unit 440 is implemented when a processor executes various programs stored in a storage device inside the communication device 40 using a Random Access Memory (RAM) or the like as a working area. Note that the control unit 440 may be implemented by an integrated circuit such as an Application Specific Integrated Circuit (ASIC) or a Field Programmable Gate Array (FPGA). Any of the CPU, the MPU, the ASIC, and the FPGA can be regarded as a controller.

As illustrated in FIG. 4, the control unit 440 includes an acquisition unit 441, a setting unit 442, and a communication control unit 343. Each block (the acquisition unit 441 to the communication control unit 443) included in the control unit 440 is a functional block that exhibits the function of the control unit 440. These functional blocks may be software blocks, or may be hardware blocks. For example, each of the above-described functional blocks may be one software module implemented by software (including a microprogram), or may be one circuit block on a semiconductor chip (die). Naturally, each functional block may be one processor or one integrated circuit. A configuration method of the functional blocks is arbitrary. Note that the control unit 440 may be configured in units of functions different from the above-described functional block.

### (Acquisition Unit 441)

The acquisition unit 441 acquires information transmitted from the information processing device 10 to the devices 50. For example, the acquisition unit 441 monitors data relayed from the information processing device 10 to the device 50, and, in a case where the monitored data includes control information or the like including a control command for the devices 50, acquires the control information. The acquisition unit 441 notifies the setting unit 442 of the acquired information.

### (Setting Unit 442)

The setting unit 442 sets the priorities of communication between the plurality of devices 50 and the information processing device 10 based on the information acquired by the acquisition unit 441. For example, the setting unit 442 estimates (detects) a user's behavior based on the information, and sets the priorities based on the detection result. The setting unit 442 estimates the user's behavior by applying machine learning or an expert system as, for example, a behavior prediction algorithm for predicting the user's behavior.

For example, the setting unit 442 estimates the user's behavior (e.g., the device 50 of interest), and sets the priority of the device 50 that the user pays attention to higher than the priorities of the other devices 50.

In a case where there are a plurality of the above-described other devices 50, the setting unit 442 may set different priorities between the plurality of other devices 50. That is, the setting unit 442 may set, for example, two levels "high" and "low" of priorities, or may set three levels "high", "medium", and "low" or four or more levels of priorities.

For example, the setting unit 442 may set three or more levels of priorities based on information (e.g., control command) acquired from the information processing device 10 in a past certain period. More specifically, the setting unit 442 sets the priority according to the user's behavior within the past certain period. That is, the setting unit 442 sets to the highest level (e.g., the priority "high") the priority of the device 50 that the setting unit 442 estimates the user is currently paying attention to. Furthermore, the setting unit 442 sets to the second highest level (e.g., the priority "medium") the priority of the device 50 for which the frequency of user's attention in the past certain period is a predetermined value or more. The setting unit 442 sets to a low level (e.g., the priority "low") the priorities of rest of the devices 50, that is, the devices 50 that the user does not pay attention to (or the frequency of attention is less than the predetermined value) at present and in the past certain period.

### (Communication Control Unit 443)

The communication control unit 443 relays communication between the devices 50 and the information processing device 10 based on the priorities set by the setting unit 442. For example, the communication control unit 443 controls the wireless communication unit 410 according to the priorities, and relays communication between the devices 50 and the information processing device 10.

More specifically, the communication control unit 443 controls an order to relay data such that data (e.g., video data) transmitted from the device 50 of a higher priority reaches the information processing device 10 earlier. That is, the communication control unit 443 relays communication between the devices 50 and the information processing device 10 according to the order matching the priorities.

When, for example, items of video data are received from the device 50A of the priority "high" and the device 50B of the priority "low", the communication control unit 443 transmits the video data received from the device 50A to the base station 30 earlier than the video data received from the device 50B.

Alternatively, the communication control unit 443 relays communication between the devices 50 and the information processing device 10 with a delay matching the priority such that, for example, data transmitted from the device 50 of a higher priority has a smaller delay.

When, for example, the items of video data are received from the device 50A of the priority "high" and the device 50B of the priority "low", the communication control unit 443 sets an allowable delay amount of the video data received from the device 50A smaller than an allowable delay amount of the video data received from the device 50B.

Alternatively, the communication control unit 443 relays data transmitted from the device 50 of a higher priority using a larger resource. For example, the communication control unit 443 relays communication between the devices 50 and the information processing device 10 using bandwidths matching the priorities.

For example, the communication control unit 443 relays to the base station 30 data of the device 50 of a higher priority using wider frequency resources (bandwidth) among uplink frequency resources allocated from the base station 30. When, for example, the items of video data are received from the device 50A of the priority "high" and the device 50B of the priority "low", the communication control unit 443 transmits the video data received from the device 50A to the base station 30 using a wider bandwidth than that used for the video data received from the device 50B.

Here, the communication control unit 443 sets communication parameters such as the transmission order (relay order) and the use bandwidths according to the priorities set by the setting unit 442, but the present disclosure is not limited thereto. For example, the setting unit 442 may set communication parameters matching the priorities. In this case, the communication control unit 443 controls the wireless communication unit 410 such that communication is performed using the communication parameters set by the setting unit 442.

### <2.5. Configuration Example of Device>

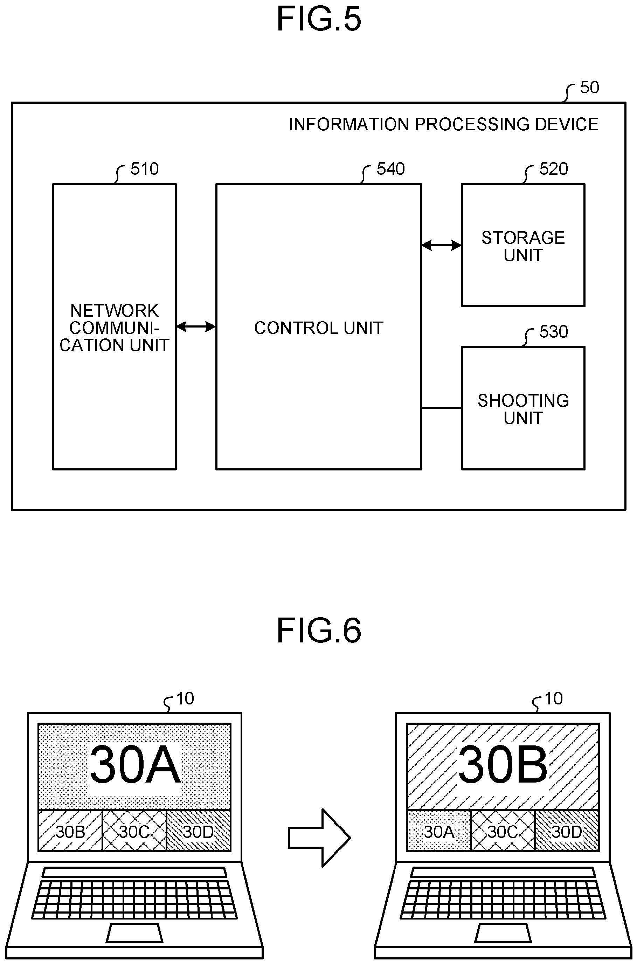

FIG. 5 is a block diagram illustrating the configuration example of the device 50 according to the embodiment of the present disclosure. FIG. 5 illustrates a case where the device 50 is a camera (shooting device) that has a shooting function. The device 50 includes a network communication unit 510, a storage unit 520, a shooting unit 530, and a control unit 540. Note that the configuration illustrated in FIG. 5 is a functional configuration, and a hardware configuration may be different from the functional configuration. Furthermore, the functions of the device 50 may be implemented in a distributed manner in a plurality of physically separated components.

The network communication unit 510 is a communication interface for communicating with other devices. The network communication unit 510 may be a network interface, or may be a device connection interface. For example, the network communication unit 510 may include a Local Area Network (LAN) interface such as a Network Interface Card (NIC), or may include a Universal Serial Bus (USB) interface including a USB host controller, a USB port, or the like. Furthermore, the network communication unit 510 may be a wired interface, or may be a wireless interface. The network communication unit 510 functions as communication means of the device 50. The network communication unit 510 is connected to the communication device 40 via the router 20B under control of the control unit 540. The configuration of the network communication unit 510 may be the same as that of the network communication unit 110 of the information processing device 10.

The storage unit 520 is a storage device such as a Dynamic Random Access Memory (DRAM), a Static Random Access Memory (SRAM), a flash memory, or a hard disk in which data can be read and written. The storage unit 520 functions as storage means of the device 50.

The shooting unit 530 is a camera that includes at least a lens and an image sensor (a CMOS, a CCD, and the like). The shooting unit 530 shoots a movie or a still image and generates shooting data under control of the control unit 540.

The control unit 540 is a controller that controls each unit of the device 50. The control unit 540 is implemented by, for example, a processor such as a Central Processing Unit (CPU) or a Micro Processing Unit (MPU). For example, the control unit 540 is implemented when a processor executes various programs stored in a storage device inside the device 50 using a Random Access Memory (RAM) or the like as a working area. Note that the control unit 540 may be implemented by an integrated circuit such as an Application Specific Integrated Circuit (ASIC) or a Field Programmable Gate Array (FPGA). Any of the CPU, the MPU, the ASIC, and the FPGA can be regarded as a controller.

### <<3. Information Transmitted from Information Processing Device>>

Here, an example of information transmitted from the information processing device 10 to the devices 50 will be described with reference to FIG. 6. FIG. 6 is a view for describing the example of the information transmitted by the information processing device 10 according to the embodiment of the present disclosure.

For example, it is assumed that videos shot by the devices 50 are displayed on the display unit of the information processing device 10 while the devices 50 perform shooting. At this time, as illustrated in FIG. 6, for example, a main video that the user who is a camera operator tries to shoot is displayed large on the display unit. On the other hand, sub videos that the user is not gazing at are displayed on the display unit smaller than the main video. Note that, in FIG. 6, reference numerals of the devices 50A to 50D are assigned to the shot videos of the devices 50A to 50D (see FIG. 1).

It is assumed that the user selects the device 50A as the camera that shoots the main video at the start of shooting. In this case, as illustrated on the left side of FIG. 6, the shot image of the device 50A is displayed large as the main video on the display unit, and the shot images of the other devices 50B to 50D are displayed small as sub-videos on the display unit.

Next, it is assumed that the user switches the camera (hereinafter, also referred to as a main device) that shoots the main video from the device 50A to the device 50B. In this case, the information processing device 10 generates a switching control command (an example of information) for switching the main device, and transmits the switching control command to the devices 50A and 50B.

The communication device 40 relays the switching control command to the devices 50A and 50B, lowers the priority of the device 50A, and increases the priority of the device 50B. For example, it is assumed that, in a case where the priority of the device 50A is set to "high" and the priority of the device 50B is set to "low", the communication device 40 receives the switching control command for switching the main device from the device 50A to the device 50B. In this case, the communication device 40 switches the priority of the device 50A from "high" to "low", and switches the priority of the device 50B from "low" to "high". Note that, in a case where a plurality of levels of priorities can be set, the communication device 40 may set to "medium" the priority of the device 50A whose priority has been "high". As described above, in a case where the priority is lowered, the communication device 40 may lower the priority to a next lower priority.

The communication device 40 relays the video from the device 50 to the information processing device 10 according to the priority changed according to the switching control command. For example, the communication device 40 relays the video data of the device 50B whose priority has been switched to "high" preferentially over the video data of the other devices 50A, 50C, and 50D.

The information processing device 10 that has received the video data via the communication device 40 displays the main video larger than the sub videos on the display unit. In the example on the right side in FIG. 6, the information processing device 10 displays the main video of the main device 50B large on the display unit, and displays the sub-videos of the other devices 50A, 50C, and 50D small on the display unit.

Note that the information transmitted from the information processing device 10 to the devices 50 is not limited to the above-described switching control command. In addition to the switching control command, the information can include various of pieces of information such as an angle switching command for switching angles of the devices 50, a zoom switching command for switching zoom, a focus command for adjusting the focus, and a setting command for changing settings of the devices 50.

### <<4. Relay Processing>>

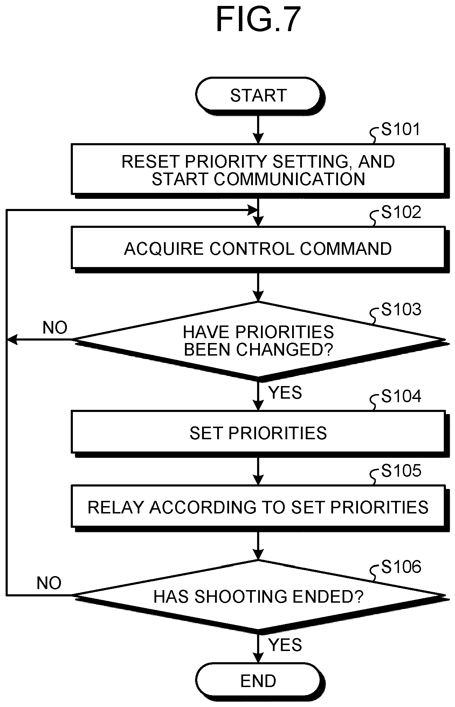

FIG. 7 is a flowchart illustrating an example of relay processing executed by the communication device 40 according to the embodiment of the present disclosure.

As illustrated in FIG. 7, the communication device 40 resets priority settings of the devices 50, and starts communication (Step S101). For example, the communication device 40 relays communication between the devices 50 and the information processing device 10 assuming that all of the devices 50 have the same priority. More specifically, for example, the communication device 40 equally allocates bands (frequency resources) to all of the devices 50, and relays communication between the devices 50 and the information processing device 10.

Next, the communication device 40 acquires a control command (an example of information) transmitted from the information processing device 10 (Step S102). The communication device 40 estimates a user's behavior based on the acquired control command, and determines whether or not to change the priority (Step S103).

In a case where, for example, it is estimated based on the control command that the device 50 that the user pays attention to has not been changed, the communication device 40 determines not to change the priority (Step S103; No), and the processing returns to Step S102. On the other hand, in a case where, for example, it is estimated based on the control command that the device 50 that the user pays attention to has been changed, the communication device 40 determines to change the priority (Step S103; Yes), and sets the priorities of the devices 50 based on the estimation result (Step S104).

The communication device 40 relays communication between the devices 50 and the information processing device 10 according to the set priorities (Step S105). The communication device 40 determines whether or not shooting has ended (Step S106).

When the communication device 40 determines that shooting has not ended (Step S106; No), the processing returns to Step S102, and, when the communication device 40 determines that shooting has ended (Step S106; Yes), the processing ends.

As described above, the communication device 40 according to the embodiment of the present disclosure monitors information (e.g., a control command for a service) transmitted from the information processing device 10, and automatically recognizes (estimates) a behavior of a user who receives the provided service based on the monitored control command. The communication device 40 sets a priority order (priority) of communication (e.g., transmission packets including video data) to be relayed based on the automatically recognized user's behavior. The communication device 40 executes communication control such as band control according to the set priority order.

As described above, the communication device 40 sets the priorities of the devices 50 based on the information acquired from the information processing device 10, and relays communication between the information processing device 10 and the devices 50 based on the set priorities.

Consequently, the communication system 1 can implement dynamic QoS control of the plurality of devices 50 for one service including the plurality of devices 50.

Furthermore, the communication system 1 can implement dynamic QoS control based on a user's behavior even if, for example, the information processing device 10 does not set the priorities of the devices 50, that is, the user side does not perform a special operation. Furthermore, the communication system 1 can implement dynamic QoS control based on the user's behavior even if both of the information processing device 10 and the devices 50 do not perform processing for performing the dynamic QoS control. Consequently, the communication system 1 can more easily implement the dynamic QoS control.

### <<5. Modified Example>>

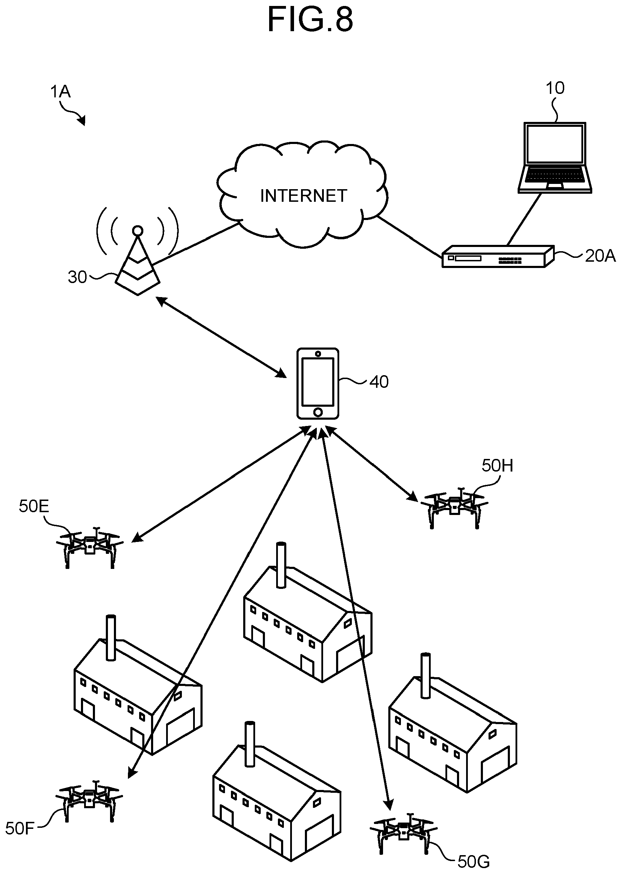

Although the devices 50 are connected with the communication device 40 via the router 20B by wire in the above-described embodiment, the present disclosure is not limited thereto. For example, the devices 50 may be wirelessly connected with the communication device 40. FIG. 8 is a view illustrating a configuration example of a communication system 1A according to the modified example of the embodiment of the present disclosure. FIG. 8 illustrates a case where the devices 50 are flying objects such as drones.

In the example of FIG. 8, devices 50E to 50H are disposed in, for example, a factory, and fly and perform shooting according to an instruction from the information processing device 10. For example, the devices 50E and 50H shoot bird's-eye videos from above the factory, and the devices 50F and 50G go around in the factory and shoot videos. The user remotely monitors and guards the factory by, for example, checking videos shot by the devices 50E to 50H.

Note that the communication system 1A illustrated in FIG. 8 is the same as the communication system 1 illustrated in FIG. 1 except that the devices 50E to 50H are flying objects and the devices 50E to 50H wirelessly communicates with the communication device 40. Although FIG. 8 illustrates a case where the number of the devices 50 is four, the number of the devices 50 may be three or less or five or more.

Similarly to the above-described embodiment, the communication device 40 estimates a behavior (the device 50 of interest) of a user (e.g., a person in charge of security) based on information (e.g., a control command for the devices 50) transmitted by the information processing device 10. The communication device 40 increases the priority of video data of the device 50 of interest based on the estimated behavior, and transmits the video data to the information processing device 10.

In addition to uplink communication for transmitting the video data to the base station 30, the communication device 40 according to the present modified example can also perform priority control (dynamic QoS control) based on a user's behavior in downlink communication for receiving data from the information processing device 10 via the base station 30.

For example, the communication device 40 may increases a priority of a control command for the device 50 that the user is paying attention to compared to control commands for the other devices 50, and relays the control command to the device 50. Here, the control commands for the devices 50 can include, for example, a control command related to shooting of the devices 50 such as angle switching, and, in addition, a command related to flight control such as a movement instruction of the devices 50.

Furthermore, the communication device 40 may perform priority control of communication between the communication device 40 and the devices 50 in addition to the priority control of communication between the communication device 40 and the base station 30. The communication device 40 sets the priorities of communication between the communication device 40 and the devices 50 according to a user's behavior estimated based on the information (e.g., a control command or the like) from the information processing device 10. The communication device 40 communicates with the devices 50 based on the set priorities.

For example, it is assumed that the information processing device 10 transmits, to the devices 50E and 50G, a switching command for switching a video of interest from a video shot by the device 50E to a video shot by the device 50G. In this case, the communication device 40 estimates that the device 50 that the user pays attention to has been switched from the device 50E to the device 50G based on the switching command.

The communication device 40 sets the priorities of the devices 50 according to the user's behavior (switching of the device of interest). For example, the communication device 40 lowers the priority of the device 50E, and increases the priority of the device 50G. The communication device 40 communicates with the devices 50 according to the priorities. The communication device 40 performs communication by, for example, making a bandwidth used for communication with the device 50G wider than a bandwidth used for communication with the device 50E. Note that the communication device 40 may perform priority control during uplink communication from the devices 50, or may perform priority control in both of uplink communication from the devices 50 and downlink communication to the devices 50.

Consequently, even in a case where the devices 50 and the communication device 40 perform wireless communication, the communication system 1A can execute dynamic QoS control matching a user's behavior similarly to the communication system 1.

### <<6. Other Embodiments

The above-described embodiment and modified example are examples, and various modifications and applications are possible.

Although, for example, the plurality of devices 50 disposed in the communication systems 1 and 1A are connected with the communication device 40 wirelessly or by wire in the above-described embodiment and modified example, the present disclosure is not limited thereto. For example, part of the plurality of devices 50 may be wirelessly connected with the communication device 40, and the rest may be connected with the communication device 40 by wire, that is, the plurality of devices 50 may be connected with the communication device 40 by different methods. In a case where, for example, a game is shot in the stadium using fixed cameras and drones having cameras mounted thereon, the devices 50 that are the fixed cameras may be connected to the communication device 40 by wire, and the devices 50 that are the drones may be connected to the communication device 40 wirelessly.

Furthermore, the number of services provided by the one communication system 1 (1A) is not limited to one. For example, the one communication system 1 (1A) may provide a plurality of different services such as relay and security.

For example, the relay service may be provided to a user A by the cameras disposed in a stadium, and the security and monitoring services may be provided to a user B by the drones disposed in the same stadium. At this time, the user A who receives the provided relay service and the user B who receives the provided security and monitoring services may be the same user or may be different users.

Furthermore, a plurality of services provided by the one communication system 1 (1A) may be services provided from the same place, or may be services provided from different places. In a case where, for example, the one communication system 1 (1A) is the relay service and the security service as described above, a place (e.g., stadium) where relay is performed and a place (e.g., factory) where the security is performed may be different places.

Furthermore, although the communication device 40 sets the priorities of communication between the plurality of devices 50 and the information processing device 10 in the above-described embodiment and modified example, the present disclosure is not limited thereto. A device that relays communication between the plurality of devices 50 and the information processing device 10 may set the priorities. For example, the routers 20A and 20B (see FIGS. 1 and 8) may set the priorities based on the information transmitted by the information processing device 10.

For example, a control device that controls the information processing device 10, the communication device 40, and the devices 50 according to the present embodiment may be implemented by a dedicated computer system, or may be implemented by a general-purpose computer system.

For example, a communication program for executing the above-described operation is stored in a computer-readable recording medium such as an optical disk, a semiconductor memory, a magnetic tape, or a flexible disk, and distributed. Furthermore, for example, the communication program is installed in a computer, and the above-described processing is executed to configure the control device. At this time, the control device may be a device (e.g., personal computer) outside the information processing device 10, the communication device 40, and the devices 50. Furthermore, the control device may be a device (e.g., control units 130, 440, and 540) inside the information processing device 10, the communication device 40, and the devices 50.

Furthermore, the above communication program may be stored in a disk device included in a server device on a network such as the Internet such that the communication program can be downloaded to the computer. Furthermore, the above-described functions may be implemented by cooperation of an Operating System (OS) and application software. In this case, components other than the OS may be stored in a medium and distributed, or components other than the OS may be stored in a server device such that the components can be downloaded to the computer.

Furthermore, it is possible to manually perform all or part of processing described as the processing that is automatically performed among each processing described in each of the above embodiment, or automatically perform by a known method all or part of processing described as the processing that is manually performed. Furthermore, the processing procedures, the specific names, and the information including the various items of data and the parameters illustrated in the above description and drawings can be arbitrarily changed unless otherwise designated. For example, the various pieces of information illustrated in each drawing are not limited to the illustrated information.

Furthermore, each component of each illustrated device is functionally conceptual, and does not necessarily need to be physically configured as illustrated. That is, the specific modes of distribution and integration of each device are not limited to the illustrated modes, and all or part of the components can be functionally or physically distributed/integrated and configured in an arbitrary unit according to various loads, usage conditions, and the like. Note that this configuration by way of distribution/integration may be performed dynamically.

Furthermore, the above-described embodiment can be combined as appropriate within a range without making processing contents contradict each other. Furthermore, the order of each step illustrated in the flowchart of the above-described embodiment can be changed as appropriate.

Furthermore, for example, the present embodiment can be carried out as any component constituting a device or a system such as a processor that is a system Large Scale Integration (LSI) or the like, a module that uses a plurality of processors or the like, a unit that uses a plurality of modules or the like, a set obtained by further adding other functions to the unit (i.e., part of a configuration of the device), or the like.

Note that, in the present embodiment, the system means a set of a plurality of components (such as devices and modules (parts)), and whether or not all of the components are in the same housing does not matter. Therefore, a plurality of devices housed in separate housings and connected via a network, and one device in which a plurality of modules are housed in one housing are both the systems.

Furthermore, for example, the present embodiment can employ a configuration of cloud computing where one function is shared and processed in cooperation by a plurality of devices via a network.

### <<7. Conclusion>>

Although the embodiment of the present disclosure has been described above, the technical scope of the present disclosure is not limited to the above-described embodiment as is, and various modifications can be made without departing from the gist of the present disclosure. Furthermore, components according to different embodiments and modifications may be appropriately combined.

Furthermore, the effects according to the embodiment described in the description are merely examples and are not limited thereto, and other effects may be provided.

Note that the technique according to the present disclosure can also employ the following configurations.
(1) A communication device that relays communication between an information processing device and a plurality of devices, the communication device comprising:
   a setting unit that sets priorities of the communication between the information processing device and the plurality of devices based on information transmitted by the information processing device to at least one of the plurality of devices; and
   a communication unit that relays the communication between the information processing device and the plurality of devices according to the priorities.
(2) The communication device according to (1), wherein the communication unit relays the communication from the plurality of devices to the information processing device according to the priorities.
(3) The communication device according to (1) or
   (2), wherein the communication unit relays the communication from the information processing device to the plurality of devices according to the priorities.
(4) The communication device according to anyone of (1) to (3), wherein the setting unit estimates a behavior of a user who operates the plurality of devices via the information processing device based on the information, and sets the priorities matching an estimation result.
(5) The communication device according to anyone of (1) to (4), wherein the information includes control information for controlling at least one of the plurality of devices.
(6) The communication device according to anyone of (1) to (5), wherein the communication unit relays the communication using bandwidths matching the priorities.
(7) The communication device according to anyone of (1) to (6), wherein the communication unit relays the communication according to an order matching the priorities.
(8) The communication device according to anyone of (1) to (7), wherein the communication unit relays the communication with delay times matching the priorities.
(9) The communication device according to anyone of (1) to (8), wherein the setting unit sets three or more levels of the priorities based on the information received within a past certain period.
(10) The communication device according to anyone of (1) to (9), wherein the communication unit performs communication matching the priorities for communication between the own communication device and a base station during the communication performed with the information processing device via the base station.
(11) The communication device according to anyone of (1) to (10), wherein the communication unit performs communication matching the priorities during communication between the own communication device and the plurality of devices.
(12) A communication method for relaying communication between an information processing device and a plurality of devices, the communication method comprising:
   setting priorities of the communication between the information processing device and the plurality of devices based on information transmitted by the information processing device to at least one of the plurality of devices; and
   relaying the communication between the information processing device and the plurality of devices according to the priorities.
(13) A communication system comprising:
   an information processing device;
   a plurality of devices that communicate with the information processing device; and
   a communication device that relays the communication between the information processing device and the plurality of devices,
   wherein the communication device includes
   a setting unit that sets priorities of the communication between the information processing device and the plurality of devices based on information transmitted by the information processing device to at least one of the plurality of devices, and
   a communication unit that relays the communication between the information processing device and the plurality of devices according to the priorities.

### Reference Signs List

1 COMMUNICATION SYSTEM
10 INFORMATION PROCESSING DEVICE
20 ROUTER
30 BASE STATION
40 COMMUNICATION DEVICE
50 DEVICE
110, 330, 430, 510 NETWORK COMMUNICATION UNIT
120, 320, 420, 520 STORAGE UNIT
130, 340, 440, 540 CONTROL UNIT
310, 410 WIRELESS COMMUNICATION UNIT
530 SHOOTING UNIT

## Claims

1. A communication device that relays communication between an information processing device and a plurality of devices, the communication device comprising:
a setting unit that sets priorities of the communication between the information processing device and the plurality of devices based on information transmitted by the information processing device to at least one of the plurality of devices; and
a communication unit that relays the communication between the information processing device and the plurality of devices according to the priorities.

2. The communication device according to claim 1, wherein the communication unit relays the communication from the plurality of devices to the information processing device according to the priorities.

3. The communication device according to claim 1, wherein the communication unit relays the communication from the information processing device to the plurality of devices according to the priorities.

4. The communication device according to claim 1, wherein the setting unit estimates a behavior of a user who operates the plurality of devices via the information processing device based on the information, and sets the priorities matching an estimation result.

5. The communication device according to claim 1, wherein the information includes control information for controlling at least one of the plurality of devices.

6. The communication device according to claim 1, wherein the communication unit relays the communication using bandwidths matching the priorities.

7. The communication device according to claim 1, wherein the communication unit relays the communication according to an order matching the priorities.

8. The communication device according to claim 1, wherein the communication unit relays the communication with delay times matching the priorities.

9. The communication device according to claim 1, wherein the setting unit sets three or more levels of the priorities based on the information received within a past certain period.

10. The communication device according to claim 1, wherein the communication unit performs communication matching the priorities for communication between the own communication device and a base station during the communication performed with the information processing device via the base station.

11. The communication device according to claim 1, wherein the communication unit performs communication matching the priorities during communication between the own communication device and the plurality of devices.

12. A communication method for relaying communication between an information processing device and a plurality of devices, the communication method comprising:
setting priorities of the communication between the information processing device and the plurality of devices based on information transmitted by the information processing device to at least one of the plurality of devices; and
relaying the communication between the information processing device and the plurality of devices according to the priorities.

13. A communication system comprising:
an information processing device;
a plurality of devices that communicate with the information processing device; and
a communication device that relays the communication between the information processing device and the plurality of devices,
wherein the communication device includes
a setting unit that sets priorities of the communication between the information processing device and the plurality of devices based on information transmitted by the information processing device to at least one of the plurality of devices, and
a communication unit that relays the communication between the information processing device and the plurality of devices according to the priorities.
